# EUROPEAN PATENT SPECIFICATION

(11) **EP 4 397 529 B1**
(45) Date of publication and mention of the grant of the patent: **14.01.2026**
(21) Application number: 22863590.0
(22) Date of filing: 01.09.2022
(51) Int. Cl.: B60L 53/16, H01R 13/639, B60L 53/30, E05B 9/00, E05B 15/00, E05B 15/08, E05B 63/14, H01R 13/629

(54) **LINKAGE DEVICE FOR SYNCHRONOUSLY CONTROLLING MULTIPLE LOCK RODS, CHARGING DEVICE AND MOTOR VEHICLE**
GESTÄNGEVORRICHTUNG ZUR SYNCHRONEN STEUERUNG MEHRERER STANGEN, LADEVORRICHTUNG UND KRAFTFAHRZEUG
DISPOSITIF DE TRINGLERIE POUR LA COMMANDE SYNCHRONE DE MULTIPLES TIGES DE VERROUILLAGE, DISPOSITIF DE CHARGE ET VÉHICULE À MOTEUR

(30) Priority: 02.09.2021 CN 202111028187
(43) Date of publication of application: 10.07.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/116560
(87) International publication number: WO 2023/030456

(56) References cited:
- CN-A- 109 941 132
- CN-A- 109 941 132
- CN-A- 110 273 596
- CN-A- 110 273 596
- CN-A- 110 696 657
- CN-A- 113 619 413
- CN-A- 113 619 414
- CN-U- 209 556 596
- CN-U- 209 556 596
- CN-U- 211 107 004
- CN-U- 212 380 665
- CN-U- 215 590 506
- CN-U- 215 590 507
- DE-A1- 102010 041 314

## Description

### RELATED APPLICATION

The present disclosure claims priority to Chinese Invention Patent Application No. 202111028187.2, entitled 'linkage device for synchronously controlling multiple lock rods, charging device and motor vehicle', and filed on September 2, 2021.

### TECHNICAL FIELD

The present disclosure relates to the technical field of new energy automobiles, and particularly to a linkage device for synchronously controlling multiple lock rods, a charging device and a motor vehicle.

### BACKGROUND

The battery electric vehicle among the new energy automobiles is an automobile that uses a single battery as an energy storage power source and provides electric energy to a motor through a battery to drive the motor to run, thereby promoting the automobile to travel. Rechargeable batteries of the pure electric automobile mainly include a lead-acid battery, a nickel-cadmium battery, a nickel-hydrogen battery, a lithium-ion battery, etc., which can provide power for the electric automobile. Meanwhile, the pure electric automobile also stores electric energy through the battery to drive the motor to run and enable the automobile to travel normally. The battery of the pure electric automobile is mainly charged by a charging gun of the new energy automobile.

In the existing charging technologies, when multiple charging interfaces, e.g., DC and AC charging interfaces, are distributed in a charging stand, it is possible to use different charging guns for charging. In the existing technical solutions, multiple driving devices are used to respectively control the lock connections between the multiple charging interfaces and the charging guns, and each driving device drives a corresponding lock rod to lock and connect the charging gun to a corresponding charging stand for charging, which causes the problems of large number of parts of the driving device and high manufacturing cost. An electric lock capable of positioning and aligning is known from the prior art, for example from CN209556596U. A door synchronization unlocking structure and door with the same is known from the prior art, for example from CN110273596A. A double-bar electronic lock for car charging seat is known from the prior art, for example from CN109941132A.

Therefore, in the technical field of new energy automobiles, there is an urgent need for a linkage device for synchronously controlling multiple lock rods, a charging device and a motor vehicle, in which one driving device can be used to simultaneously control multiple lock rods to lock and connect a charging gun, thereby overcoming the defects of the prior art and solving the problems of large number of parts of the driving device and high manufacturing cost.

### SUMMARY

The present disclosure aims to provide a linkage device for synchronously controlling multiple lock rods, a charging device and a motor vehicle, so as to overcome the problems in the prior art. In the linkage device for synchronously controlling multiple lock rods of the present disclosure, a linkage structure is provided, so that one driving device can synchronously control two or more actuating mechanisms through the linkage structure, thereby improving the control precision, and effectively reducing the manufacturing cost and the number of sub-parts. The invention is set out in the appended set of claims. Any references to inventions or embodiments not falling within the scope of the independent claims are to be interpreted as examples useful for understanding the invention.

The present disclosure provides a linkage device for synchronously controlling multiple lock rods, including a driving device having an output end connected to a linkage structure, the linkage structure being connected to at least two lock rods, and the driving device driving, through the linkage structure, each of the lock rods to move synchronously.

The present disclosure further provides a charging device, including the aforementioned linkage device for synchronously controlling multiple lock rods.

The present disclosure further provides a motor vehicle, including the aforementioned linkage device for synchronously controlling multiple lock rods.

Based on the above content, the linkage device for synchronously controlling multiple lock rods, the charging device and the motor vehicle of the present disclosure have the following advantageous effects:

In the linkage device for synchronously controlling multiple lock bars of the present disclosure, a linkage structure is designed, so that one driving device can synchronously control two or more actuating mechanisms through the linkage structure, thereby effectively reducing the manufacturing cost, the number of sub-parts, and the difficulty and cost of the assembly process.

The linkage structure of the present disclosure utilizes the principle of position limiting and chute, uses a lever to change the force direction, thereby driving multiple lock rods to synchronously telescope.

All parts in the linkage structure of the present disclosure are simple in structure, convenient to manufacture and beneficial to popularization and use.

### BRIEF DESCRIPTION OF DRAWINGS

For a clearer illustration of technical features in the embodiments of the present disclosure, a brief description of the drawings for the embodiments of the present disclosure will be given below. Obviously, the drawings described below involve only some embodiments of this disclosure. For those of ordinary skill in the art, other drawings can be derived from these drawings without any inventive efforts. In the drawings: In the drawings,
FIG. 1 illustrates a schematic diagram of a linkage device for synchronously controlling multiple lock rods of the present disclosure.
FIG. 2 illustrates a structural diagram of a transmission shaft of the present disclosure.
FIG. 3 illustrates a schematic diagram of an end face of a first end of a transmission shaft of the present disclosure.
FIG. 4 illustrates a structural diagram of a lever of the present disclosure.
FIG. 5 illustrates a structural diagram of a first lock rod of the present disclosure.
FIG. 6 illustrates a structural diagram of a second lock rod of the present disclosure.

### DETAILED DESCRIPTION OF EMBODIMENTS

For a clearer understanding of the objectives, technical features and effects of the present disclosure, specific embodiments will now be described with reference to the drawings.

The specific embodiments of the present disclosure described here are intended to explain the present disclosure and do not limit the scope of the present disclosure. It should be noted that when an element is referred to as being 'disposed' on another element, it may be directly on another element or there may be an intervening element. When an element is regarded as being 'connected' to another element, it may be directly connected to another element or there may be an intervening element at the same time. The terms 'mount' and 'connect' should be understood in a broad sense. For example, a connection may be a mechanical connection or an electrical connection, or an internal communication between two elements, or a direct connection, or an indirect connection through an intermediate medium. For those of ordinary skill in the art, the specific meanings of the above terms can be understood according to the specific conditions. The terms 'vertical', 'horizontal', 'upper', 'lower', 'left', 'right' and similar expressions used herein are for an illustration purpose only rather than indicating a unique embodiment.

Unless otherwise defined, all technical and scientific terms used herein have the same meanings as those commonly understood by those of ordinary skilled in the art of the present disclosure. The terms used in the Specification of the present disclosure are only for the purpose of describing the specific embodiments, rather than limiting the present disclosure. The term 'and/or' used herein includes any and all combinations of one or more of the related items listed.

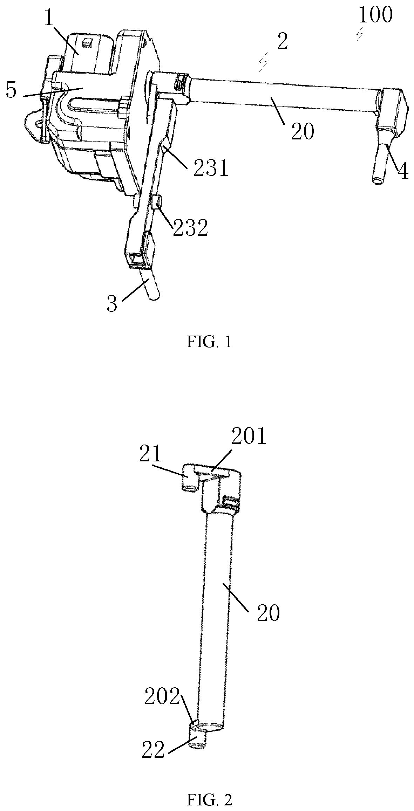

As illustrated in FIGS. 1 to 6, the present disclosure provides a linkage device 100 for synchronously controlling multiple lock rods, including a driving device 1 having an output end connected to a linkage structure 2. The linkage structure 2 is connected to at least two lock rods, and each of the lock rods is used for being connected to a charging gun head. The driving device 1 drives, through the linkage structure 2, each of the lock rods to move synchronously. The driving device 1 includes, but is not limited to, a motor or an electronic lock, and the linkage structure 2 is connected to an output end of the motor or the electronic lock to realize a torque transmission.

Further, the movement of the lock rod is one or more selected from telescoping, translation, rotation, swinging, bending and twisting. The linkage structure 2 drives at least two lock rods to move, and the mode of movement may be selected according to the actual use environment, as long as the multiple lock rods can be controlled synchronously.

Further, the lock rod is plugged with a keyhole of the charging gun to fix the charging gun. The keyhole is prior art and is not illustrated in the figures.

An important objective of the present disclosure is to lock the charging gun, and each of the lock rods can be inserted into the keyholes of different charging guns for locking, so as to prevent the situation that the charging gun falls off from the charging stand during charging and the charging of the automobile cannot be continued. In addition, the falling off charging gun, which is electriferous, may also cause a risk of electric shock casualties.

In a specific embodiment, a shape of the lock rod is one or more selected from a circular cylinder, a circular truncated cone, a circular cone, an elliptic cylinder, an elliptic truncated cone, an elliptic cone, a polygonal prism, a polygonal truncated cone and a polygonal cone, which may be selected deepening on the shape of the keyhole of the charging gun during actual use.

According to the invention, the linkage structure 2 is connected to a first lock rod 3 and a second lock rod 4, which are spatially disposed at a first angle. The first angle may be determined according to actual use needs, and in a specific embodiment, the two lock rods are spatially perpendicular to each other. The first lock rod 3 is used for being connected to a first charging gun head, and the second lock rod 4 is used for being connected to a second charging gun head. The first charging gun head and the second charging gun head are of the prior art, and may be the existing charging structures. The driving device 1 drives the first lock rod 3 and the second lock rod 4 to move synchronously through the linkage structure 2. In this embodiment, the first lock rod 3 is an AC lock rod, the first charging gun head is an AC charging gun head, the second lock rod 4 is a DC lock rod, the second charging gun head is a DC charging gun head, and the motor drives the first lock rod 3 and the second lock rod 4 to move synchronously through the linkage structure 2.

In practical applications, the linkage device 100 for synchronously controlling multiple lock rods of the present disclosure is disposed in a hollow housing (not illustrated in the figures).

In a specific embodiment, the first lock rod 3 and the second lock rod 4 are both actuating mechanisms, so that the first lock rod 3 and the second lock rod 4, which serve as actuating mechanisms, are driven by an output end of the driving device 1 to extend or retract synchronously to act as bolts. One driving device 1 can synchronously control two or more actuating mechanisms through the linkage structure 2, thereby effectively reducing the manufacturing cost and the number of sub-parts.

In the linkage device for synchronously controlling multiple lock rods of the present disclosure, the linkage structure 2 is disposed, so that one driving device 1 can synchronously control two actuating mechanisms through the linkage structure 2, thereby effectively reducing the manufacturing cost, the number of sub-parts, and the difficulty and cost of the assembly process.

Further, as illustrated in FIGS. 1 and 2, the linkage structure 2 includes a transmission shaft 20 coaxially disposed with an output end of the driving device 1, and a first end of the transmission shaft 20 is fixedly connected to the output end of the driving device 1. The first end of the transmission shaft 20 is provided with a first link rotating shaft 21 which is connected to the first lock rod 3, and the transmission shaft 20 is capable of driving, through the first link rotating shaft 21, the first lock rod 3 to telescope. A second end of the transmission shaft 20 is provided with a second link rotating shaft which is connected to the second lock rod 4, and the transmission shaft 20 is capable of driving, through the second link rotating shaft, the second lock rod 4 to telescope. The linkage structure 2 drives the first lock rod 3 and the second lock rod 4 to synchronously telescope.

Further, the first lock rod 3 has a length of 5 mm to 55 mm, and the second lock rod 4 has a length of 5 mm to 55 mm.

If the first lock rod 3 and the second lock rod 4 are too short, the locking cannot be completed, and if the first lock rod 3 and the second lock rod 4 are too long, they will interfere with the charging gun to generate abnormal sound. Therefore, the inventor uses the first lock rods 3 with different lengths and the second lock rods 4 with different lengths for tests. It is unqualified if the locking cannot be completed or abnormal sound occurs. The test results are shown in Table 1.

**Table 1: Influence of different lengths of the lock rod on the locking**

| | | | | | | | | | | | | |
|---|---|---|---|---|---|---|---|---|---|---|---|---|
| Length of the lock rod (mm) | 4 | 5 | 8 | 11 | 16 | 21 | 28 | 39 | 47 | 52 | 55 | 56 |
| Whether locking can be completed | No | Yes | Yes | Yes | Yes | Yes | Yes | Yes | Yes | Yes | Yes | Yes |
| Whether abnormal sound occurs | No | No | No | No | No | No | No | No | No | No | No | Yes |

As can be seen from Table 1, when the length of the lock rod is less than 5 mm, the lock rod cannot lock the charging gun, and when the length of the lock rod is greater than 55 mm, the lock rod will interfere with the charging gun and generate abnormal sound. Therefore, the inventor selects the length of the first lock rod 3 to be 5 mm to 55 mm and the length of the second lock rod 4 to be 5 mm to55 mm.

Further, the first lock rod has a maximum stroke of 5 mm to 36 mm, and the second lock rod has a maximum stroke of 5 mm to 36 mm.

Similarly, if the maximum strokes of the first lock rod 3 and the second lock rod 4 are too short, the first lock rod 3 and the second lock rod 4 cannot lock the charging gun, and if the maximum strokes are too long, the first lock rod 3 and the second lock rod 4 will interfere with the charging gun to generate abnormal sound. Therefore, the inventor uses the first lock rods 3 with different maximum strokes and the second lock rods 4 with different maximum strokes for tests. It is unqualified if the locking cannot be completed or abnormal sound occurs. The test results are shown in Table 2.

**Table 2: Influence of different maximum strokes of the lock rod on the locking**

| | | | | | | | | | | | | |
|---|---|---|---|---|---|---|---|---|---|---|---|---|
| Maximum stroke (mm) | 4 | 5 | 8 | 10 | 12 | 15 | 19 | 23 | 28 | 32 | 36 | 38 |
| Whether locking can be completed | No | Yes | Yes | Yes | Yes | Yes | Yes | Yes | Yes | Yes | Yes | Yes |
| Whether abnormal sound occurs | No | No | No | No | No | No | No | No | No | No | No | Yes |

As can be seen from Table 2, when the maximum stroke of the lock rod is less than 5 mm, the locking cannot be completed, and when the maximum stroke of the lock rod is greater than 36 mm, abnormal sound will occur. Therefore, the inventor selects the maximum stroke of the first lock rod 3 to be 5 mm to 36 mm and the maximum stroke of the second lock rod 4 to be 5 mm to 36 mm.

Further, as illustrated in FIG. 2, the first link rotating shaft 21 is connected to a side wall of the first end of the transmission shaft 20, a central axis of the first link rotating shaft 21 may be disposed in parallel with a central axis of the transmission shaft 20 or may be disposed at any other angle, and the first link rotating shaft 21 is rotatable around the central axis of the transmission shaft 20 along with the transmission shaft 20. The linkage structure further includes a lever structure, the first link rotating shaft 21 is rotatably and slidably connected to a first end of the lever structure, and a second end of the lever structure is rotatably and slidably connected to the first lock rod 3.

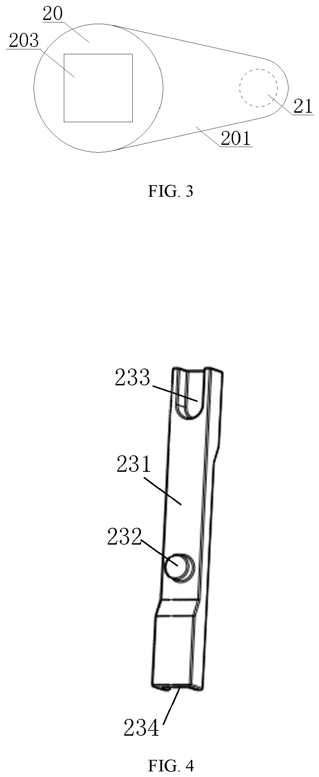

Further, as illustrated in FIGS. 1 and 4, the lever structure includes a lever 231 connected to a lever rotating shaft 232, the lever rotating shaft 232 is fixedly disposed and has a central axis parallel with a central axis of the transmission shaft 20, the lever 231 is rotatable around the central axis of the lever rotating shaft 232 (the lever 231 is rotatable around the lever rotating shaft 232), and a rotation direction of the lever 231 is opposite to that of the transmission shaft 20.

Further, as illustrated in FIGS. 1 and 4, the lever 231 is disposed in an elongated shape, and a first chute 233 is disposed on a side wall of the first end of the lever 231. The first chute 233 is extended inward from an end face of the first end of the lever 231, and the first link rotating shaft 21 rotatably and slidably passes through the first chute 233. A width direction of the first chute 233 is spatially perpendicular to the central axis of the lever rotating shaft 232, and a width of the first chute 233 is greater than or equal to an outer diameter of the first link rotating shaft 21.

Further, a bottom of the first chute 233 close to one end of the lever rotating shaft 232 is disposed in an arc-shape. The contour shape of the first chute 233 may be adjusted according to actual needs.

Further, the end face of the first end of the lever 231 is disposed as a plane.

The profile shape of the lever 231 and the mounting position of the lever rotating shaft 232 may be adjusted according to the actual applications, and the outer diameter of the first link rotating shaft 21, and the width and the length of the first chute 233 may be determined according to the actual needs, so that the application range is wide.

Further, as illustrated in FIG. 2, the first end of the transmission shaft 20 is provided with a first connecting plate 201 extending outward radially, and the first link rotating shaft 21 is disposed on the first connecting plate 201.

Further, as illustrated in FIG. 3, a keyway 203 (square groove) is disposed on an end face of the first end of the transmission shaft 20, the output end of the driving device 1 is matched with the keyway 203, and the transmission shaft 20 is connected to the output end of the driving device 1 through the keyway 203.

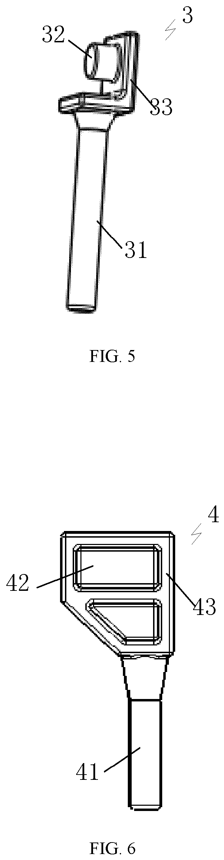

Further, as illustrated in FIGS. 1 and 5, the first lock rod 3 includes a first-lock-rod limiting pin 31, one end of the first lock rod 3 is provided with a first rotating shaft 32 having a central axis perpendicular to a central axis of the first-lock-rod limiting pin 31, and the first rotating shaft 32 is rotatably and slidably connected to the second end of the lever.

Further, as illustrated in FIG. 5, a third chute 234 is disposed on a side wall of the second end of the lever 231, the third chute 234 is extended inward from an end face of the second end of the lever 231, and the first rotating shaft 32 rotatably passes through the third chute 234. A width direction of the third chute 234 is spatially perpendicular to the central axis of the lever rotating shaft 232, and a width of the third chute 234 is greater than an outer diameter of the first rotating shaft 32. The connection between the lever 231 and the first link rotating shaft 21 on the transmission shaft 20 and the connection between the lever 231 and the first rotating shaft 32 on the first lock rod 3 change the force direction through the lever, and finally the rotation of the first rotating shaft 32 is converted into a telescopic movement of the first-lock-rod limiting pin 31.

Further, a bottom of the third chute 234 close to one end of the lever rotating shaft 232 is disposed in an arc-shape.

Further, as illustrated in FIG. 5, one end of the first-lock-rod limiting pin 31 is connected to a third connecting plate 33 disposed in an L-shape, and the first rotating shaft 32 is disposed on the third connecting plate 33. The contour shape of the third connecting plate 33 may be adjusted according to the actual applications.

Further, as illustrated in FIGS. 1 and 2, the second link rotating shaft includes a second rotating shaft 22 connected to a side wall of the second end of the transmission shaft 20, a central axis of the second rotating shaft 22 is disposed in parallel with a central axis of the transmission shaft 20, the second rotating shaft 22 is rotatable around the central axis of the transmission shaft 20 along with the transmission shaft 20, and the second rotating shaft 22 is rotatably and slidably connected to the first end of the second lock rod 4.

Further, as illustrated in FIG. 6, the second lock rod 4 includes a second-lock-rod limiting pin 41, one end of the second lock rod 4 is provided with a second chute 42, a central axis of the second rotating shaft 22 is perpendicular to a central axis of the second-lock-rod limiting pin 41, the second rotating shaft 22 is rotatably and slidably connected to the second chute 42, a width direction of the second chute 42 is parallel to the central axis of the second-lock-rod limiting pin 41, and a width of the second chute 42 is greater than or equal to an outer diameter of the second rotating shaft 22. Through the connection between the second lock rod 4 and the second rotating shaft 22, the rotation of the second rotating shaft 22 is converted into a telescopic movement of the second-lock-rod limiting pin 41.

Further, the first rotating shaft 32 and the second rotating shaft 22 have the same rotation radius, which enables the first lock rod 3 and the second lock rod 4 to lock synchronously.

Further, the second chute 42 is disposed in a rectangle, a parallelogram, a polygon, a trapezoid, a rhombus or an oblong shape.

Further, as illustrated in FIG. 6, one end of the second-lock-rod limiting pin 41 is provided with a second-lock-rod connecting buckle plate 43, one side of which is provided with the second chute 42, and a transition inclined plane is disposed between the second-lock-rod connecting buckle plate 43 and the second-lock-rod limiting pin 41.

Further, as illustrated in FIG. 2, the second end of the transmission shaft 20 is provided with a second connecting plate 202 extending outward radially, and the second rotating shaft 22 is disposed on the second connecting plate 202.

The diameters of the lock rods of the first-lock-rod limiting pin 31 and the second-lock-rod limiting pin 41 are determined according to actual needs, and the settings of each hinge point and each moment arm in the linkage structure 2 are determined according to actual needs.

The working process of the linkage device for synchronously controlling multiple lock rods of the present disclosure is as follows:
a torque is input by the driving device 1 (motor), the transmission shaft 20 is connected to the output end of the driving device 1 through the keyway 203, and the output end of the driving device 1 drives the transmission shaft 20 to rotate through the keyway 203;
the first link rotating shaft 21 and the second rotating shaft 22 rotate around the central axis of the transmission shaft 20 along with the transmission shaft 20;
the first link rotating shaft 21 rotatably passes through the first chute 233, the first link rotating shaft 21 drives the lever 231 to rotate around the central axis of the lever rotating shaft 232, and the rotation direction of the lever 231 is opposite to that of the first link rotating shaft 21;
the first rotating shaft 32 on the first lock rod 3 rotatably passes through the third chute 234, and the rotation of the lever 231 drives the first-lock-rod limiting pin 31 to telescope (move along the central axis of the first-lock-rod limiting pin 31), thereby completing the extending and retracting of the first lock rod 3; and
the second rotating shaft 22 rotatably and slidably passes through the second chute 42, and the rotation of the second rotating shaft 22 drives the second-lock-rod limiting pin 41 to telescope (move along the central axis of the second-lock-rod limiting pin 41), thereby completing the extending and retracting of the second lock rod 4.

In some embodiments, the driving device 1 has an output power of 0.35 W to 5.56 W.

The output power of the driving device 1 determines the working speed of the linkage device, i.e., the larger the power, the faster the linkage device works, and as the power decreases, the linkage device works slower and even the rotation torque of the transmission shaft 20 is insufficient to complete the locking by the first lock rod 3 and the second lock rod 4. In order to test the influence of the output power on the work of the linkage device, the inventor carries out relevant tests. The test method is to select the driving devices 1 with different output power, and the linkage devices of the same structure, wherein each of the driving devices 1 works continuously for 1 minute, and then the number of times of work completion by the linkage device is recorded. If the number of times is greater than or equal to 40, it is qualified, otherwise it is unqualified. If abnormal sound occurs during the working of the linkage device, it is also unqualified. The results are shown in Table 3.

**Table 3: Influence of different output power on the speed of the linkage device and the abnormal sound**

| | | | | | | | | | | | | | |
|---|---|---|---|---|---|---|---|---|---|---|---|---|---|
| Power (W) | 0.3 | 0.35 | 0.50 | 0.80 | 1.13 | 1.22 | 1.39 | 1.75 | 2.41 | 3.68 | 4.86 | 5.56 | 5.60 |
| Number of times of completion | 38 | 40 | 47 | 52 | 55 | 58 | 61 | 63 | 65 | 66 | 70 | 71 | 71 |
| Whether there is abnormal sound | No | No | No | No | No | No | No | No | No | No | No | No | Yes |

As shown in Table 3, when the output power of the driving device 1 is less than 0.35 W, the number of times of locking or unlocking completed by the linkage device is less than 40 in one minute, and the speed is too slow to be qualified, so the inventor selects the minimum power of the driving device 1 to be 0.35 W. When the output power of the driving device 1 is greater than 5.56 W, due to the overall design, the speed of the linkage device enters a bottleneck period without an obvious improvement, and abnormal noise occurs at the same time, so the inventor selects the output power of the driving device 1 to be 0.35 W to 5.56 W. Specifically, the output power may be 0.9 W, 0.96 W, 1 W, or 1.08 W.

In some embodiments, the driving device 1 has an output end which has an output torque of 2.25 N·mm to 9.85 N·mm.

The output torque of the driving device 1 determines the magnitude of the force applied to the transmission shaft 20. If the torque is not enough, the first lock rod 3 and the second lock rod 4 cannot be driven to work. In order to verify the influence of different output torques of the driving device 1 on the locking or unlocking of the linkage device, the inventor carries out relevant tests. The test method is to select the driving devices 1 with different output torques, and the other structures of the linkage device are the same. It is qualified if the driving device 1 can normally drive the transmission shaft 20 to work, otherwise it is unqualified, and it is also unqualified if abnormal sound occurs in the linkage device during work. The test results are shown in Table 4.

**Table 4: Whether driving device 1 with different torques can normally drive the transmission shaft 20 to work**

| | | | | | | | | | | | | | |
|---|---|---|---|---|---|---|---|---|---|---|---|---|---|
| Torque (N·mm) | 2.15 | 2.25 | 3.0 | 3.6 | 3.9 | 4.5 | 5. | 5.5 | 6 | 7.4 | 8.6 | 9.85 | 10 |
| Whether work is possible | No | Yes | Yes | Yes | Yes | Yes | Yes | Yes | Yes | Yes | Yes | Yes | Yes |
| Whether abnormal sound occurs | No | No | No | No | No | No | No | No | No | No | No | No | Yes |

As shown in Table 4, when the output torque of the driving device 1 is less than 2.25 N·mm, the transmission shaft 20 cannot be driven to work, so the inventor selects the minimum output torque of the driving device 1 to be 2.25 N·mm. When the output torque is greater than 9.85 N·mm, although the transmission shaft 20 can be driven to work, abnormal sound occurs when the linkage device works because the output torque is too large, so the inventor selects the output torque of the driving device 1 to be 2.25 N·mm to 9.85 N·mm. Specifically, the output torque may be 3.5 N·mm or 4 N·mm.

In some embodiments, the transmission shaft 20 has a rotation angle of 15° to 92°.

The rotation angle of the transmission shaft 20 can also determine the strokes of the first lock rod 3 and the second lock rod 4. When the rotation angle of the transmission shaft 20 is too small, the strokes of the first lock rod 3 and the second lock rod 4 are not enough, and the locking cannot be completed. When the rotation angle of the transmission shaft 20 is too large, after the first lock rod 3 and the second lock rod 4 extend to the working positions, the transmission shaft 20 is still outputting a rotation force, which easily leads to the damage of the linkage device. In order to verify the influence of the rotation angle of the transmission shaft 20 on the linkage device, the inventor carries out tests. The test method is to use the drive devices 1 with the transmission shafts 20 of different rotation angles, and the other structures of the linkage device are the same. It is qualified when the strokes of the first lock rod 3 and the second lock rod 4 enable locking to be completed, otherwise it is unqualified. A larger rotation angle means larger strokes of the first lock rod 3 and the second lock rod 4, which correspondingly requires an increase in the size of each connecting parts and accordingly, thus easily leading to a touch with other components in the linkage device and thus affecting the use of the linkage device, so that the rotation angle of the transmission shaft 20 in this case is also considered unqualified. The test results are shown in Table 5.

**Table 5: Influence of different rotation angles of the transmission shaft on the function of the linkage device and the touch with other components**

| | | | | | | | | | | | | | |
|---|---|---|---|---|---|---|---|---|---|---|---|---|---|
| Rotation angle | 14 | 15 | 28 | 36 | 47 | 55 | 61 | 70 | 78 | 83 | 89 | 92 | 93 |
| Whether locked | No | Yes | Yes | Yes | Yes | Yes | Yes | Yes | Yes | Yes | Yes | Yes | Yes |
| Whether touched | No | No | No | No | No | No | No | No | No | No | No | No | Yes |

As can be seen from Table 5, when the rotation angle of the transmission shaft 20 is less than 15°, the strokes of the first lock rod 3 and the second lock rod 4 are not enough, and the locking cannot be completed. When the rotation angle of the transmission shaft 20 is greater than 92°, there will be unnecessary contact between the components of the linkage device, which generates abnormal sound and is unqualified. Therefore, the inventor selects the rotation angle of the output end of the transmission shaft 20 to be 15° to 92°. Specifically, the rotation angle may be 50°, 60°, 70° or 80°.

Further, the transmission shaft 20 is made of a material including metal or non-metal.

Further, the material of the transmission shaft 20 includes carbon steel, mere copper, pure copper, aluminum-clad zinc, aluminum-clad copper or zinc alloy. These metals or alloys have better strength and toughness, which can better meet the needs of the transmission shaft.

Further, the material of the transmission shaft 20 includes one or more selected from the group consisting of polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyterephthalic acid, polyurethane elastomer, styrene block copolymer, perfluoroalkoxy alkane, chlorinated polyethylene, polyphenylene sulfide, polystyrene, crosslinked polyolefin, ethylene/vinyl acetate copolymer, crosslinked polyethylene, polycarbonate, polysulfone, polyphenylene oxide, polyester, phenolic resin, urea-formaldehyde, styrene-acrylonitrile copolymer, polymethacrylate, and polyformaldehyde resin.

Taking polyformaldehyde, polyester, polycarbonate, polyamide, polyphenylene sulfide and polytetrafluoroethylene as examples: polyformaldehyde is a hard and dense material with a smooth and shiny surface, and is yellowish or white in color and can be used for a long time in a temperature range of -40°Cto 100°C. Polyformaldehyde has a wear resistance and a self-lubrication superior to those of most engineering plastics, and also has good oil resistance and peroxide resistance.

Polyester is generally made of terephthalic acid and butanediol, and has chain segments including a hard segment and a soft segment, and polyester is a thermoplastic elastomer.

Polycarbonate has high strength and elastic coefficient, high impact strength, good fatigue resistance, good dimensional stability, small creep, high transparency and free chromaticity.

Polyamide is nontoxic and light, with an excellent mechanical strength and good wear resistance and corrosion resistance. Polyamide can be used to replace metals such as copper to manufacture parts such as bearings, gears and pump blades in the industries of machinery, chemicals, instruments, automobiles or the like.

Polyphenylene sulfide is a new high-performance thermoplastic resin, which has the advantages of high mechanical strength, high temperature resistance, chemical resistance, flame retardancy, good thermal stability and excellent electrical properties.

Polytetrafluoroethylene has the characteristics of acid resistance, alkali resistance and resistances to various organic solvents, and is almost insoluble in any solvent. Meanwhile, polytetrafluoroethylene has the characteristic of high temperature resistance.

Further, the material of the transmission shaft 20 includes glass fiber, which makes the transmission shaft 20 have a higher strength and certain smoothness.

Further, the first lock rod 3 and the second lock rod 4 are made of a material including one or more selected from the group consisting of polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyterephthalic acid, polyurethane elastomer, styrene block copolymer, perfluoroalkoxy alkane, chlorinated polyethylene, polyphenylene sulfide, polystyrene, crosslinked polyolefin, ethylene/vinyl acetate copolymer, crosslinked polyethylene, polycarbonate, polysulfone, polyphenylene oxide, polyester, phenolic resin, urea-formaldehyde, styrene-acrylonitrile copolymer, polymethacrylate, and polyformaldehyde resin.

Taking polyformaldehyde, polycarbonate and polyamide as examples: polyformaldehyde is a hard and dense material with a smooth and shiny surface, and is yellowish or white in color and can be used for a long time in a temperature range of -40°Cto 100°C. Polyformaldehyde has a wear resistance and a self-lubrication superior to those of most engineering plastics, and also has good oil resistance and peroxide resistance.

Polycarbonate is colorless, transparent, heat-resistant and impact-resistant with a flame-retardant grade BI, and has good mechanical properties under an ordinary use temperature. Compared with polymethyl methacrylate with similar properties, polycarbonate has a better impact resistance, a higher refractive index and a better processability, and achieves a very high flame retardant performance without additives.

Polyamide is nontoxic and light, with an excellent mechanical strength and good wear resistance and corrosion resistance. Polyamide can be used to replace metals such as copper to manufacture parts such as bearings, gears and pump blades in the industries of machinery, chemicals, instruments, automobiles or the like. The first lock rod 3 and the second lock rod 4 requires characteristics such as high strength, high temperature resistance and high wear resistance. Therefore, polycarbonate or polyamide is the first choice for material of the first lock rod 3 and the second lock rod 4.

In a specific embodiment, the first rotating shaft 32 and the second rotating shaft 22 are provided with wear-resistant plating layers.

Further, a material of the wear-resistant plating layer includes ceramic, an alloy, an oxide or fluoroplastic.

In an exemplary embodiment, the wear-resistant plating layer includes one or more selected from the group consisting of gold, silver, nickel, tin, tin-lead alloy, zinc, silver-antimony alloy, palladium, palladium-nickel alloy, graphite silver, hard silver, graphene silver and silver-gold-zirconium alloy.

The test on the corrosion resistance time in Table 6 below is to put the first rotating shaft 32 and the second rotating shaft 22 into a salt spray test chamber, spray salt fog on each position of the first rotating shaft 32 and the second rotating shaft 22, take out and clean the rotating shafts every 20 hours to observe the surface corrosions thereof, which is a cycle, stop the test when a corrosion area of the surface of each of the first rotating shaft 32 and the second rotating shaft 22 is more than 10% of a total area thereof, and then record the number of cycles at that time. In this embodiment, the number of cycles less than 80 is unqualified.

The number of times of plugging and unplugging in Table 6 is obtained as follows: the first rotating shaft or the second rotating shaft is fixed on an experimental platform; after every 100 times of plugging and unplugging, it is necessary to stop and observe the damage of the wear-resistant plating layer on the surface of the first rotating shaft 32 or the second rotating shaft 22; if the wear-resistant plating layer is scraped and the material of the first rotating shaft or the second rotating shaft is exposed, the test is stopped and the number of times of plugging and unplugging at that time is recorded. In this embodiment, the number of times of plugging and unplugging less than 8000 is unqualified.

**Table 6: Influence of different materials of the plating layer on the number of times of plugging and unplugging of the first rotating shaft and the second rotating shaft and on the corrosion resistance**

| Different materials of the wear-resistant plating layer | | | | | | | | | | | | |
|---|---|---|---|---|---|---|---|---|---|---|---|---|
| Hard silver | Gold | Silver | Nickel | Tin | Tin-lead alloy | Zinc | Silver-antimony alloy | Palladium | Palladiu m-nickel alloy | Graphite silver | Graphene silver | Silver-gold-zirconium alloy |
| Number of times of plugging and unplugging | | | | | | | | | | | | |
| 12800 | 12500 | 11800 | 9500 | 9200 | 9800 | 9500 | 12200 | 12100 | 12200 | 12500 | 12000 | 10000 |

| Number of cycles of corrosion resistance tests | | | | | | | | | | | | |
|---|---|---|---|---|---|---|---|---|---|---|---|---|
| 133 | 135 | 120 | 92 | 88 | 89 | 95 | 126 | 118 | 121 | 129 | 130 | 133 |

As can be seen from Table 6, when the plating layer is made of gold, silver, silver-antimony alloy, palladium, palladium-nickel alloy, graphite silver, hard silver, graphene silver or silver-gold-zirconium alloy, the test result is much better than the standard value, and the performance is stable. When the plating layer is made of nickel, tin, tin-lead alloy or zinc, the test result also meets the requirement. Therefore, the inventor selects that the material of the plating layer is selected from one or more from gold, silver, nickel, tin, tin-lead alloy, zinc, hard silver, silver-antimony alloy, palladium, palladium-nickel alloy, graphite silver, graphene silver and silver-gold-zirconium alloy.

The present disclosure further provides a charging device including the aforementioned linkage device for synchronously controlling multiple lock rods.

The present disclosure further provides a motor vehicle including the aforementioned linkage device for synchronously controlling multiple lock rods.

Based on the above content, the linkage device for synchronously controlling multiple lock rods, the charging device and the motor vehicle of the present disclosure have the following advantageous effects:

In the linkage device for synchronously controlling multiple lock rods of the present disclosure, a linkage structure is disposed, so that one driving device can synchronously control two or more actuating mechanisms through the linkage structure, thereby effectively reducing the manufacturing cost, the number of sub-parts, and the difficulty and cost of the assembly process.

The linkage structure of the present disclosure utilizes the principle of position limiting and chute, and uses a lever to change the force direction, thereby driving multiple lock rods to move synchronously.

All parts in the linkage structure of the present disclosure are simple in structure, convenient to manufacture and beneficial to popularization and use.

## Claims

1. A linkage device (100) for synchronously controlling multiple lock rods, comprising a driving device (1) having an output end connected to a linkage structure (2), the linkage structure (2) being connected to at least two lock rods, and the driving device (1) driving, through the linkage structure (2), each of the lock rods to move synchronously;
the linkage structure (2) is connected to a first lock rod (3) and a second lock rod (4), a first angle is formed between the first lock rod (3) and the second lock rod (4) that are spatially disposed, and the driving device (1) drives the first lock rod (3) and the second lock rod (4) to move synchronously through the linkage structure (2);
the linkage structure (2) comprises a transmission shaft (20) coaxially disposed with an output end of the driving device (1), and a first end of the transmission shaft (20) is fixedly connected to the output end of the driving device (1);
the first end of the transmission shaft (20) is provided with a first link rotating shaft (21) which is connected to the first lock rod (3), and the transmission shaft (20) is capable of driving, through the first link rotating shaft (21), the first lock rod (3) to telescope; and
a second end of the transmission shaft (20) is provided with a second link rotating shaft which is connected to the second lock rod (4), and the transmission shaft (20) is capable of driving, through the second link rotating shaft, the second lock rod (4) to telescope;
wherein the linkage structure (2) further comprises a lever structure, **characterized in that** the first link shaft is rotatably and slidably connected to a first end of the lever structure, and a second end of the lever structure is rotatably and slidably connected to the first lock rod (3);
the lever structure comprises a lever (231) connected to a lever rotating shaft (232), the lever rotating shaft (232) is fixedly disposed on the lever (231) and has a central axis parallel with a central axis of the transmission shaft (20), and the lever (231) is rotatable around the central axis of the lever rotating shaft (232).

2. The linkage device (100) for synchronously controlling multiple lock rods according to claim 1, wherein the movement of each of the lock rods is one or more selected from telescoping, translation, rotation, swinging, bending and twisting; or
the lock rods are plugged with a keyhole of a charging gun to fix the charging gun; or
a shape of the first lock rod (3) is one or more selected from a circular cylinder, a circular truncated cone, a circular cone, an elliptic cylinder, an elliptic truncated cone, an elliptic cone, a polygonal prism, a polygonal truncated cone, and a polygonal cone.

3. The linkage device (100) for synchronously controlling multiple lock rods according to claim 1, wherein
the lever (231) is disposed in an elongated shape, a first chute is disposed on a side wall of the first end of the lever (231), the first chute extends inward from an end face of the first end of the lever (231), the first link rotating shaft (21) rotatably and slidably passes through the first chute, a width direction of the first chute is spatially perpendicular to the central axis of the lever rotating shaft (232), and a width of the first chute is greater than or equal to an outer diameter of the first link rotating shaft (21).

4. The linkage device (100) for synchronously controlling multiple lock rods according to claim 1, wherein the first end of the transmission shaft (20) is provided with a first connecting plate (201) extending outward radially, and the first link rotating shaft (21) is disposed on the first connecting plate (201).

5. The linkage device (100) for synchronously controlling multiple lock rods according to claim 1, wherein a keyway (203) is disposed on an end face of the first end of the transmission shaft (20), the output end of the driving device (1) is matched with the keyway (203), and the transmission shaft (20) is connected to the output end of the driving device (1) through the keyway (203).

6. The linkage device (100) for synchronously controlling multiple lock rods according to claim 1, wherein the transmission shaft (20) has a rotation angle of 15° to 92°; or
the first lock rod (3) has a length of 5 mm to 55 mm, and the second lock rod (4) has a length of 5 mm to 55 mm; or
the first lock rod (3) has a stroke of 5 mm to 36 mm, and the second lock rod (4) has a stroke of 5 mm to 36 mm.

7. The linkage device (100) for synchronously controlling multiple lock rods according to claim 1, wherein the first lock rod (3) comprises a first-lock-rod limiting pin (31), one end of the first lock rod (3) is provided with a first rotating shaft (32) having a central axis perpendicular to a central axis of the first-lock-rod limiting pin (31), and the first rotating shaft (32) is rotatably and slidably connected to the second end of the lever (231).

8. The linkage device (100) for synchronously controlling multiple lock rods according to claim 7, wherein a third chute (234) is disposed on a side wall of the second end of the lever (231), the third chute (234) extends inward from an end face of the second end of the lever (231), the first rotating shaft (32) rotatably passes through the third chute (234), a width direction of the third chute (234) is spatially perpendicular to the central axis of the lever rotating shaft (232), and a width of the third chute (234) is greater than or equal to an outer diameter of the first rotating shaft (32).
preferably wherein a bottom of the third chute (234) close to one end of the lever rotating shaft (232) is disposed in an arc-shape.

9. The linkage device (100) for synchronously controlling multiple lock rods according to claim 7, one end of the first-lock-rod limiting pin (31) is connected to a third connecting plate (33) disposed in an L-shape, and the first rotating shaft (32) is disposed on the third connecting plate (33).

10. The linkage device (100) for synchronously controlling multiple lock rods according to claim1, wherein one end of the first lock rod (3) is provided with a first rotating shaft (32), and the second link rotating shaft comprises a second rotating shaft (22) connected to a side wall of the second end of the transmission shaft (20), and the second rotating shaft (22) is rotatably and slidably connected to the first end of the second lock rod (4).

11. The linkage device (100) for synchronously controlling multiple lock rods according to claim 10, wherein the second lock rod (4) comprises a second-lock-rod limiting pin (41), one end of the second lock rod (4) is provided with a second chute, a central axis of the second rotating shaft (22) is perpendicular to a central axis of the second-lock-rod limiting pin (41), a width direction of the second chute is parallel to the central axis of the second-lock-rod limiting pin (41), and a width of the second chute (42) is greater than or equal to an outer diameter of the second rotating shaft (22).

12. The linkage device (100) for synchronously controlling multiple lock rods according to claim 11, wherein the first rotating shaft (32) and the second rotating shaft (22) have a same rotation radius; or
the second chute (42) is disposed in a rectangle, a parallelogram, a polygon, a trapezoid, a rhombus or an oblong shape; or
one end of the second-lock-rod limiting pin (41) is provided with a second-lock-rod connecting buckle plate (43), one side of which is provided with the second chute (42), and a transition inclined plane is disposed between the second-lock-rod connecting buckle plate (43) and the second-lock-rod limiting pin (41).

13. The linkage device (100) for synchronously controlling multiple lock rods according to claim 10, wherein the second end of the transmission shaft (20) is provided with a second connecting plate (202) extending outward radially, and the second rotating shaft (22) is disposed on the second connecting plate (202); or
the first rotating shaft (32) and the second rotating shaft (22) are provided with wear-resistant plating layers.

14. A charging device, comprising the linkage device (100) for synchronously controlling multiple lock rods according to any one of claims 1 to 13.

15. A motor vehicle, comprising the linkage device (100) for synchronously controlling multiple lock rods according to any one of claims 1 to 13.

## Patentansprüche

1. Verbindungsvorrichtung (100) zum synchronen Steuern mehrerer Verriegelungsstangen, mit einer Antriebsvorrichtung (1), von der ein Abtriebsende mit einer Verbindungsstruktur (2) verbunden ist, wobei die Verbindungsstruktur (2) mit mindestens zwei Verriegelungsstangen verbunden ist und die Antriebsvorrichtung (1) über die Verbindungsstruktur (2) jede der Verriegelungsstangen zu synchroner Bewegung antreibt;
die Verbindungsstruktur (2) mit einer ersten Verriegelungsstange (3) und einer zweiten Verriegelungsstange (4) verbunden ist, wobei zwischen der ersten Verriegelungsstange (3) und der zweiten Verriegelungsstange (4), die räumlich angeordnet sind, ein erster Winkel gebildet ist, und die Antriebsvorrichtung (1) die erste Verriegelungsstange (3) und die zweite Verriegelungsstange (4) über die Verbindungsstruktur (2) zu synchroner Bewegung antreibt;
die Verbindungsstruktur (2) eine Getriebewelle (20) umfasst, die koaxial zu einem Abtriebsende der Antriebsvorrichtung (1) angeordnet ist, und ein erstes Ende der Getriebewelle (20) fest mit dem Abtriebsende der Antriebsvorrichtung (1) verbunden ist;
das erste Ende der Getriebewelle (20) mit einer ersten Verbindungsdrehwelle (21) versehen ist, die mit der ersten Verriegelungsstange (3) verbunden ist, und die Getriebewelle (20) in der Lage ist, über die erste Verbindungsdrehwelle (21) die erste Verriegelungsstange (3) zum Ausfahren anzutreiben; und
ein zweites Ende der Getriebewelle (20) mit einer zweiten Verbindungsdrehwelle versehen ist, die mit der zweiten Verriegelungsstange (4) verbunden ist, und die Getriebewelle (20) in der Lage ist, über die zweite Verbindungsdrehwelle die zweite Verriegelungsstange (4) zum Ausfahren anzutreiben;
wobei die Verbindungsstruktur (2) ferner eine Hebelstruktur umfasst,
**dadurch gekennzeichnet, dass** die erste Verbindungswelle drehbar und verschiebbar mit einem ersten Ende der Hebelstruktur verbunden ist und ein zweites Ende der Hebelstruktur drehbar und verschiebbar mit der ersten Verriegelungsstange (3) verbunden ist;
die Hebelstruktur einen Hebel (231) umfasst, der mit einer Hebeldrehwelle (232) verbunden ist, wobei die Hebeldrehwelle (232) fest an dem Hebel (231) angeordnet ist und eine Mittelachse aufweist, die parallel zu einer Mittelachse der Getriebewelle (20) verläuft, und der Hebel (231) um die Mittelachse der Hebeldrehwelle (232) drehbar ist.

2. Verbindungsvorrichtung (100) zum synchronen Steuern mehrerer Verriegelungsstangen nach Anspruch 1, wobei die Bewegung jeder der Verriegelungsstangen eine oder mehrere von Ausfahren, Verschieben, Drehen, Schwenken, Biegen und Verdrehen umfasst; oder
die Verriegelungsstangen mit einem Schlüsselloch einer Ladepistole verbunden sind, um die Ladepistole zu fixieren; oder
die Form der ersten Verriegelungsstange (3) eine oder mehrere von einem kreisförmigen Zylinder, einem kreisförmigen Kegelstumpf, einem kreisförmigen Kegel, einem elliptischen Zylinder, einem elliptischen Kegelstumpf, einem elliptischen Kegel, einem polygonalen Prisma, einem polygonalen Kegelstumpf und einem polygonalen Kegel ist.

3. Verbindungsvorrichtung (100) zum synchronen Steuern mehrerer Verriegelungsstangen nach Anspruch 1, bei der
der Hebel (231) in einer langgestreckten Form angeordnet ist, eine erste Rinne an einer Seitenwand des ersten Endes des Hebels (231) angeordnet ist, die erste Rinne sich von einer Endfläche des ersten Endes des Hebels (231) nach innen erstreckt, die erste Verbindungsdrehwelle (21) drehbar und verschiebbar durch die erste Rinne verläuft, eine Breitenrichtung der ersten Rinne räumlich senkrecht zur Mittelachse der Hebeldrehwelle (232) ist und eine Breite der ersten Rinne größer oder gleich einem Außendurchmesser der ersten Verbindungsdrehwelle (21) ist.

4. Verbindungsvorrichtung (100) zum synchronen Steuern mehrerer Verriegelungsstangen nach Anspruch 1, bei der das erste Ende der Getriebewelle (20) mit einer ersten Verbindungsplatte (201) versehen ist, die sich radial nach außen erstreckt, und die erste Verbindungsdrehwelle (21) auf der ersten Verbindungsplatte (201) angeordnet ist.

5. Verbindungsvorrichtung (100) zum synchronen Steuern mehrerer Verriegelungsstangen nach Anspruch 1, bei der eine Keilnut (203) an einer Stirnfläche des ersten Endes der Getriebewelle (20) angeordnet ist, das Abtriebsende der Antriebsvorrichtung (1) mit der Keilnut (203) zusammenpasst und die Getriebewelle (20) über die Keilnut (203) mit dem Abtriebsende der Antriebsvorrichtung (1) verbunden ist.

6. Verbindungsvorrichtung (100) zum synchronen Steuern mehrerer Verriegelungsstangen nach Anspruch 1, bei der die Getriebewelle (20) einen Drehwinkel von 15° bis 92° aufweist; oder
die erste Verriegelungsstange (3) eine Länge von 5 mm bis 55 mm aufweist und die zweite Verriegelungsstange (4) eine Länge von 5 mm bis 55 mm aufweist; oder
die erste Verriegelungsstange (3) einen Hub von 5 mm bis 36 mm aufweist und die zweite Verriegelungsstange (4) einen Hub von 5 mm bis 36 mm aufweist.

7. Verbindungsvorrichtung (100) zum synchronen Steuern mehrerer Verriegelungsstangen nach Anspruch 1, bei der die erste Verriegelungsstange (3) einen ersten Verriegelungsstangen-Begrenzungsstift (31) umfasst, ein Ende der ersten Verriegelungsstange (3) mit einer ersten Drehwelle (32) versehen ist, von der eine Mittelachse senkrecht auf der Mittelachse des Begrenzungsstifts (31) für die erste Verriegelungsstange steht, und die erste Drehwelle (32) drehbar und verschiebbar mit dem zweiten Ende des Hebels (231) verbunden ist.

8. Verbindungsvorrichtung (100) zum synchronen Steuern mehrerer Verriegelungsstangen nach Anspruch 7, bei der eine dritte Rinne (234) an einer Seitenwand des zweiten Endes des Hebels (231) angeordnet ist, sich die dritte Rinne (234) von einer Stirnfläche des zweiten Endes des Hebels (231) nach innen erstreckt, die erste Drehwelle (32) drehbar durch die dritte Rinne (234) verläuft, eine Breitenrichtung der dritten Rinne (234) räumlich senkrecht zur Mittelachse der Hebeldrehwelle (232) ist und eine Breite der dritten Rinne (234) größer oder gleich einem Außendurchmesser der ersten Drehwelle (32) ist,
vorzugsweise bei der ein Boden der dritten Rinne (234) nahe einem Ende der Hebeldrehwelle (232) in einer Bogenform angeordnet ist.

9. Verbindungsvorrichtung (100) zum synchronen Steuern mehrerer Verriegelungsstangen nach Anspruch 7, bei der ein Ende des Begrenzungsstifts (31) der ersten Verriegelungsstange mit einer dritten Verbindungsplatte (33) verbunden ist, die in L-Form angeordnet ist, und die erste Drehwelle (32) auf der dritten Verbindungsplatte (33) angeordnet ist.

10. Verbindungsvorrichtung (100) zum synchronen Steuern mehrerer Verriegelungsstangen gemäß Anspruch 1, bei der ein Ende der ersten Verriegelungsstange (3) mit einer ersten Drehwelle (32) versehen ist und die zweite Verbindungsdrehwelle eine zweite Drehwelle (22) umfasst, die mit einer Seitenwand des zweiten Endes der Getriebewelle (20) verbunden ist, und die zweite Drehwelle (22) drehbar und verschiebbar mit dem ersten Ende der zweiten Verriegelungsstange (4) verbunden ist.

11. Verbindungsvorrichtung (100) zum synchronen Steuern mehrerer Verriegelungsstangen nach Anspruch 10, bei der die zweite Verriegelungsstange (4) einen Begrenzungsstift (41) für die zweite Verriegelungsstange umfasst, ein Ende der zweiten Verriegelungsstange (4) mit einer zweiten Rinne versehen ist, eine Mittelachse der zweiten Drehwelle (22) senkrecht auf einer Mittelachse des Begrenzungsstifts (41) für die zweite Verriegelungsstange steht, eine Breitenrichtung der zweiten Rinne parallel zur Mittelachse des Begrenzungsstifts (41) für die zweite Verriegelungsstange verläuft und eine Breite der zweiten Rinne (42) größer oder gleich einem Außendurchmesser der zweiten Drehwelle (22) ist.

12. Verbindungsvorrichtung (100) zum synchronen Steuern mehrerer Verriegelungsstangen nach Anspruch 11, bei der die erste Drehwelle (32) und die zweite Drehwelle (22) denselben Drehradius aufweisen; oder
die zweite Rinne (42) in einer rechteckigen, parallelogrammförmigen, polygonalen, trapezförmigen, rhombischen oder langgestreckten Form angeordnet ist; oder
ein Ende des Begrenzungsstifts (41) für die zweite Verriegelungsstange mit einer Verbindungs-Schnallenplatte (43) für die zweite Verriegelungsstange versehen ist, deren eine Seite mit der zweiten Rinne (42) versehen ist, und eine schräge Übergangsfläche zwischen der Verbindungs-Schnallenplatte (43) für die zweite Verriegelungsstange und dem Begrenzungsstift (41) für die zweite Verriegelungsstange angeordnet ist.

13. Verbindungsvorrichtung (100) zum synchronen Steuern mehrerer Verriegelungsstangen nach Anspruch 10, bei der das zweite Ende der Getriebewelle (20) mit einer zweiten Verbindungsplatte (202) versehen ist, die sich radial nach außen erstreckt, und die zweite Drehwelle (22) auf der zweiten Verbindungsplatte (202) angeordnet ist; oder
die erste Drehwelle (32) und die zweite Drehwelle (22) mit verschleißfesten Überzugsschichten versehen sind.

14. Ladevorrichtung, umfassend die Verbindungsvorrichtung (100) zum synchronen Steuern mehrerer Verriegelungsstangen nach einem der Ansprüche 1 bis 13.

15. Kraftfahrzeug, umfassend die Verbindungsvorrichtung (100) zum synchronen Steuern mehrerer Verriegelungsstangen nach einem der Ansprüche 1 bis 13.

## Revendications

1. Dispositif de tringlerie (100) pour commander de manière synchrone de multiples tiges de verrouillage, comprenant un dispositif d'entraînement (1) présentant une extrémité de sortie connectée à une structure de tringlerie (2), la structure de tringlerie (2) étant connectée à au moins deux tiges de verrouillage, et le dispositif d'entraînement (1) entraînant, via la structure de tringlerie (2), chacune des tiges de verrouillage à se déplacer de manière synchrone ;
la structure de tringlerie (2) est connectée à une première tige de verrouillage (3) et à une seconde tige de verrouillage (4), un premier angle est formé entre la première tige de verrouillage (3) et la seconde tige de verrouillage (4) qui sont disposées dans l'espace, et le dispositif d'entraînement (1) entraîne la première tige de verrouillage (3) et la seconde tige de verrouillage (4) à se déplacer de manière synchrone via la structure de tringlerie (2) ;
la structure de tringlerie (2) comprend un arbre de transmission (20) disposé de manière coaxiale avec une extrémité de sortie du dispositif d'entraînement (1), et une première extrémité de l'arbre de transmission (20) est connectée de manière fixe à l'extrémité de sortie du dispositif d'entraînement (1) ;
la première extrémité de l'arbre de transmission (20) est pourvue d'un premier arbre de rotation de liaison (21) qui est connecté à la première tige de verrouillage (3), et l'arbre de transmission (20) est capable d'entraîner, par l'intermédiaire du premier arbre de rotation de liaison (21), la première tige de verrouillage (3) vers le télescope ; et
une seconde extrémité de l'arbre de transmission (20) est pourvue d'un second arbre de rotation de liaison qui est connecté à la seconde tige de verrouillage (4), et l'arbre de transmission (20) est capable d'entraîner, à travers le second arbre de rotation de liaison, la seconde tige de verrouillage (4) à un mouvement téléscopique ;
dans lequel la structure de tringlerie (2) comprend en outre une structure de levier, **caractérisé en ce que** le premier arbre de liaison est connecté de manière rotative et coulissante à une première extrémité de la structure de levier, et une seconde extrémité de la structure de levier est connectée de manière rotative et coulissante à la première tige de verrouillage (3) ;
la structure de levier comprend un levier (231) connecté à un arbre de rotation de levier (232), l'arbre de rotation de levier (232) est disposé de manière fixe sur le levier (231) et présente un axe central parallèle à un axe central de l'arbre de transmission (20), et le levier (231) peut tourner autour de l'axe central de l'arbre de rotation de levier (232).

2. Dispositif de tringlerie (100) pour commander de manière synchrone de multiples tiges de verrouillage selon la revendication 1, dans lequel le déplacement de chacune des tiges de verrouillage est un ou plusieurs choisis parmi un mouvement téléscopique, une translation, une rotation, un oscillation, une flexion et une torsion ; ou
les tiges de verrouillage sont bouchées avec un trou de serrure d'un pistolet de charge pour fixer le pistolet de charge ; ou
une forme de la première tige de verrouillage (3) est un ou plusieurs choisis parmi un cylindre circulaire, un cône tronqué circulaire, un cône circulaire, un cylindre elliptique, un cône tronqué elliptique, un cône elliptique, un prisme polygonal, un cône tronqué polygonal et un cône polygonal.

3. Dispositif de tringlerie (100) pour commander de manière synchrone de multiples tiges de verrouillage selon la revendication 1, dans lequel
le levier (231) est disposé en une forme allongée, une première goulotte est disposée sur une paroi latérale de la première extrémité du levier (231), la première goulotte s'étend vers l'intérieur à partir d'une face d'extrémité de la première extrémité du levier (231), le premier arbre de rotation de liaison (21) passe de manière rotative et coulissante à travers la première goulotte, une direction de largeur de la première goulotte est spatialement perpendiculaire à l'axe central de l'arbre de rotation de levier (232), et une largeur de la première goulotte est supérieure ou égale à un diamètre extérieur du premier arbre de rotation de liaison (21).

4. Dispositif de tringlerie (100) pour commander de manière synchrone de multiples tiges de verrouillage selon la revendication 1, dans lequel la première extrémité de l'arbre de transmission (20) est pourvue d'une première plaque de connexion (201) s'étendant radialement vers l'extérieur, et le premier arbre de rotation de liaison (21) est disposé sur la première plaque de connexion (201).

5. Dispositif de tringlerie (100) pour commander de manière synchrone de multiples tiges de verrouillage selon la revendication 1, dans lequel une rainure de clavette (203) est disposée sur une face d'extrémité de la première extrémité de l'arbre de transmission (20), l'extrémité de sortie du dispositif d'entraînement (1) est appariée à la rainure de clavette (203), et l'arbre de transmission (20) est connecté à l'extrémité de sortie du dispositif d'entraînement (1) par l'intermédiaire de la rainure de clavette (203).

6. Dispositif de tringlerie (100) pour commander de manière synchrone de multiples tiges de verrouillage selon la revendication 1, dans lequel l'arbre de transmission (20) présente un angle de rotation de 15° à 92 ; ou
la première tige de verrouillage (3) présente une longueur de 5 mm à 55 mm, et la seconde tige de verrouillage (4) présente une longueur de 5 mm à 55 mm ; ou
la première tige de verrouillage (3) présente une course de 5 mm à 36 mm, et la seconde tige de verrouillage (4) présente une course de 5 mm à 36 mm.

7. Dispositif de tringlerie (100) pour commander de manière synchrone de multiples tiges de verrouillage selon la revendication 1, dans lequel la première tige de verrouillage (3) comprend une première broche de limitation de tige de verrouillage (31), une première extrémité de la première tige de verrouillage (3) est pourvue d'un premier arbre de rotation (32) présentant un axe central perpendiculaire à un axe central de la première broche de limitation de tige de verrouillage (31), et le premier arbre de rotation (32) est connecté de manière rotative et coulissante à la seconde extrémité du levier (231).

8. Dispositif de tringlerie (100) pour commander de manière synchrone plusieurs tiges de verrouillage selon la revendication 7, dans lequel une troisième goulotte (234) est disposée sur une paroi latérale de la seconde extrémité du levier (231), la troisième goulotte (234) s'étend vers l'intérieur à partir d'une face d'extrémité de la seconde extrémité du levier (231), le premier arbre de rotation (32) passe de manière rotative à travers la troisième goulotte (234), une direction de largeur de la troisième goulotte (234) est spatialement perpendiculaire à l'axe central de l'arbre de rotation de levier (232), et une largeur de la troisième goulotte (234) est supérieure ou égale à un diamètre extérieur du premier arbre de rotation (32),
de préférence dans lequel un fond de la troisième goulotte (234) à proximité d'une première extrémité de l'arbre de rotation de levier (232) est disposé en une forme d'arc.

9. Dispositif de tringlerie (100) pour commander de manière synchrone de multiples tiges de verrouillage selon la revendication 7, une première extrémité de la première broche de limitation de tige de verrouillage (31) est connectée à une troisième plaque de connexion (33) disposée en une forme de L, et le premier arbre de rotation (32) est disposé sur la troisième plaque de connexion (33).

10. Dispositif de tringlerie (100) pour commander de manière synchrone de multiples tiges de verrouillage selon la revendication 1, dans lequel une première extrémité de la première tige de verrouillage (3) est pourvue d'un premier arbre de rotation (32), et le second arbre de rotation de liaison comprend un second arbre de rotation (22) connecté à une paroi latérale de la seconde extrémité de l'arbre de transmission (20), et le second arbre de rotation (22) est connecté de manière rotative et coulissante à la première extrémité de la seconde tige de verrouillage (4).

11. Dispositif de tringlerie (100) pour commander de manière synchrone de multiples tiges de verrouillage selon la revendication 10, dans lequel la seconde tige de verrouillage (4) comprend une seconde broche de limitation de tige de verrouillage (41), une extrémité de la seconde tige de verrouillage (4) est pourvue d'une deuxième goulotte, un axe central du second arbre de rotation (22) est perpendiculaire à un axe central de la seconde broche de limitation de tige de verrouillage (41), une direction de largeur de la deuxième goulotte est parallèle à l'axe central de la seconde broche de limitation de tige de verrouillage (41), et une largeur de la deuxième goulotte (42) est supérieure ou égale à un diamètre extérieur du second arbre de rotation (22).

12. Dispositif de tringlerie (100) pour commander de manière synchrone de multiples tiges de verrouillage selon la revendication 11, dans lequel le premier arbre de rotation (32) et le second arbre de rotation (22)présentent un même rayon de rotation ; ou
la deuxième goulotte (42) est disposée dans un rectangle, un parallélogramme, un polygone, un trapèze, un losange ou une forme oblongue ; ou
une extrémité de la seconde broche de limitation de tige de verrouillage (41) est pourvue d'une seconde plaque de boucle de connexion de tige de verrouillage (43), dont un côté est pourvu de la deuxième goulotte (42), et un plan incliné de transition est disposé entre la seconde plaque de boucle de connexion de tige de verrouillage (43) et la seconde broche de limitation de tige de verrouillage (41).

13. Dispositif de tringlerie (100) pour commander de manière synchrone de multiples tiges de verrouillage selon la revendication 10, dans lequel la seconde extrémité de l'arbre de transmission (20) est pourvue d'une deuxième plaque de connexion (202) s'étendant radialement vers l'extérieur, et le second arbre de rotation (22) est disposé sur la seconde plaque de connexion (202) ; ou
le premier arbre de rotation (32) et le second arbre de rotation (22) sont pourvus de couches de placage résistantes à l'usure.

14. Dispositif de charge, comprenant le dispositif de tringlerie (100) pour commander de manière synchrone de multiples tiges de verrouillage selon l'une quelconque des revendications 1 à 13.

15. Véhicule à moteur, comprenant le dispositif de tringlerie (100) pour commander de manière synchrone de multiples tiges de verrouillage selon l'une quelconque des revendications 1 à 13.
